(19) **Europäisches Patentamt / European Patent Office / Office européen des brevets**

(11) **EP 4 509 866 A1**

(12) # EUROPEAN PATENT APPLICATION

(43) Date of publication:
**19.02.2025  Bulletin 2025/08**

(21) Application number: **23191365.8**

(22) Date of filing: **14.08.2023**

(51) International Patent Classification (IPC):
**G01S 7/40** *(2006.01)*       **G01S 13/90** *(2006.01)*
**G06N 3/08** *(2023.01)*       **G06N 20/00** *(2019.01)*

(52) Cooperative Patent Classification (CPC):
**G01S 13/9027; G01S 7/4052; G06N 3/08;
G06N 20/00;** G01S 7/417

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Iceye Oy
02150 Espoo (FI)**

(72) Inventors:
- **RADIUS, Andrea
  02150 Espoo (FI)**
- **DOGAN, Ozan
  02150 Espoo (FI)**
- **VEHMAS, Risto
  02150 Espoo (FI)**

(74) Representative: **Dentons UK and Middle East LLP
One Fleet Place
London EC4M 7WS (GB)**

(54) **AUGMENTING REAL SYNTHETIC APERTURE RADAR DATA**

(57)  Provided here is a computer-implemented method, data, and a computing system for augmenting real synthetic aperture data, the method comprising obtaining defocussed real SAR data comprising data from imaging an area on the surface of the Earth, obtaining defocussed additional SAR data of one or more features which may be artificial or real, and combining the defocussed real SAR data with the defocussed additional SAR data of an artificial feature to obtain augmented defocussed SAR data.

EP 4 509 866 A1

**Description**

TECHNICAL FIELD

The invention relates to Remote Sensing, Synthetic Aperture Radar (SAR), SAR data processing and in particular, a computer implemented method and system for data and/or image processing for generating augmented SAR data from real SAR data.

BACKGROUND OF INVENTION

A Synthetic Aperture Radar (SAR) can be used to image an area on Earth, also known as a target area, by transmitting radar beams and recording the return echoes, i.e., returned radar energy, from those transmitted beams. SAR systems for Earth monitoring are typically carried on board a moving platform, such as a satellite or an aircraft, and therefore move with respect to a target on Earth to be imaged. As the platform moves, the SAR antenna location relative to the target changes with time, and this movement can be used to simulate a "synthetic" aperture for the antenna, whereby the apparently length of the antenna appears to be longer than the actual physical length of the antenna. This can provide for greater significantly resolution than could be achieved using a stationary antenna.

Typically, a SAR system transmits radio-frequency radiation in pulses and records the returning echoes. Raw data, otherwise known as unfocussed or defocussed data, derived from the returning echoes is stored for processing and can be "focussed" to form an image. SAR data contains more information than regular images, such as those obtained from optical sensors, because the SAR data is complex data that includes both amplitude and phase information. Thus, although an image formed from SAR data displaying amplitudes for various pixel may appear to be similar than a regular image, each pixel has additional information stored with it that provides greater amount of information.

Various artefacts can arise in the SAR data and in SAR images that are not representative of the real scene. For example, ambiguities can arise from radar echoes backscattered from points not in the main target imaging area. Ambiguities can cause an object or feature on the ground to appear in multiple positions in the image, only one of which is the true location. Even though the amplitude of some of these ambiguous signals may be smaller than the non-ambiguous signals, they can cause confusion in the image and degrade the quality of the image. As such, it would be desirable to be able to detect the ambiguities in the SAR image, as well as to be able to suppress these ambiguities.

Other artifacts that degrade SAR image quality can be caused by radio frequency interference (RFI). The presence of these different types of ambiguities and artifacts in SAR data makes it difficult to discern features and objects of the SAR data from the ambiguities.

One approach to tackling this issue is to detect and remove ambiguities and other artefacts using detection and/or suppression algorithms through post-processing of the SAR data. For example, some algorithms have been proposed to detect and remove estimate the local azimuth ambiguity-to-signal ratio (AASR). Machine learning, neural networks, and other artificial intelligence algorithms could also be used to detect and/or remove particular artefacts in SAR data.

However, all of these methodologies require high quality SAR data in sufficient quantity comprising the artefacts to be detected and/or suppressed to either develop and test the algorithms to ensure that they are fit for purpose. In particular, machine-learning algorithms and models require a large quantity of data to train or test the algorithms to be able to recognize and detect features, including ambiguities and other artefacts, in SAR data. Real SAR images may not always be readily available in the right quantity and with the right characteristics for doing this development, testing, and training.

There is therefore a need for SAR data of sufficient quality and in sufficient quantity containing the right features that can be used in the development and testing of algorithms and for the training of machine learning models for various purposes.

SUMMARY OF INVENTION

There is provided in the following a computer-implemented method for augmenting real synthetic aperture radar (SAR) data. The method comprises obtaining defocussed real SAR data comprising SAR imaging data acquired from an area on the surface of the Earth; obtaining defocussed additional SAR data of one or more features; and combining the defocussed real SAR data with the defocussed additional SAR data to obtain augmented defocussed SAR data. The defocussed additional SAR data may be the result of simulation and thus the augmented defocussed SAR data may comprise hybrid real-simulated SAR data.

This method is particularly suited to Single Look Complex data obtained from raw Synthetic-aperture radar, SAR, but may have other applications. Thus in one implementation a computer-implemented data-processing method for augmenting Single Look Complex data obtained from raw Synthetic-aperture radar, SAR, data, may comprise: obtaining Single Look Complex, SLC, data; defocussing the SLC data in the Azimuth and Range directions of the SLC data using an inversion function to obtain defocussed SLC data, wherein the defocussed SLC data includes Azimuth and Range data;

and inserting one or more features into the defocussed SLC data using an insertion function to obtain augmented defocussed SLC data.

Augmenting real data in this manner such as but not limited to SAR SLC data, with additional features, provides realistic augmented data that may be used for training algorithms and neural networks. The real nature of the data ensures that the data is an accurate representation of actual SAR data.

The method may further include refocussing the augmented defocussed SAR data to obtain augmented focussed SAR data, wherein the augmented focussed SAR data includes data relating to the one or more features.

The one or more features may include a real feature extracted from other real SAR data and/or an artificial feature for example generated by simulation. Using a real feature, from other SAR data, to augment the SAR data, maintains a high level of realistic accuracy which is useful in training applications. The capability of adding artificial features to real SAR data allows training of models and neural networks across a wide range of training data, that may be modified as desired, without the need to source real data corresponding to the desired features.

The one or more artificial features may include one or more of a simulated azimuth ambiguity, a simulated range ambiguity, and simulated radio frequency interference.

The term 'simulated' means that these features are artificially generated and do not come from real SAR SLC data.

The one or more artificial features may include data corresponding to one or more physical objects.

The one or more artificial features corresponding to physical objects may be point-like or complex features.

The capability of generating features or targets, such as vehicles, cities, vegetation and other features, provides extended training capabilities. This may be done as an alternative or in addition to the ambiguity-type features.

The one or more artificial features corresponding to physical features may represent one or more moving physical objects and/or one or more stationary physical objects.

The capability of simulating moving objects in real SAR data extends the training capabilities of the method.

The inversion function may be the range doppler function. This allows range and azimuth to be decoupled.

The refocussing step may comprise applying a refocussing function that is the inverse of the inversion function.

The method may further include training a neural network or supervised learning algorithm with the augmented defocussed SLC data.

The method may further include defocussing the SLC or other SAR data in the Azimuth and Range directions of the SAR data using an inversion function which includes defocussing a minor portion of the SAR data.

The minor portion may be referred to as a data tile and is a matrix of at least the minimum number of pixels or cells required to accurately and realistically add the one or more features to the SAR data. Reducing the SAR data to the data tile, or minor portion, is computationally efficient.

Selecting the minor portion of the SAR data from the SAR data may be based on at least one of a size, position and a type of the one or more features. Thus, the size and position of the data tile are dependent on the size and position of the one or more features.

The method may further include generating the one or more features based, at least in part, on SAR metadata associated with the SAR data.

The metadata may be used to ensure that the one or more features are generated or adapted based on the conditions and constraints of the original SAR data, such that, when added to the original SAR data the one or more features appear realistic.

There is also provided a computing device comprising a memory and processor, the memory having instructions stored thereon, which, when executed by the processor, cause the processor to perform any of the methods described here.

The computing device may be further configured to train a supervised learning algorithm or neural network with the augmented defocussed SLC data. This may include the use of a GPU or the like to perform parallel computing tasks.

There is provided a computer readable medium having instructions stored thereon, which, when executed by a processor, causes the processor to perform any of the methods described here.

There is provided a computer program, which when executed by a processor, causes the processor to perform any of the methods described here.

There is provided a computer system comprising a plurality of computing devices, the plurality of computing devices each having a memory and a processor, the plurality of computing devices being configured to perform any of the methods described here. The computer system may perform parallel computing tasks and may take the form of a distributed computer system or server.

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

The methods described herein may be performed by software in machine readable form on a tangible storage medium e.g., in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

BRIEF DESCRIPTION OF THE DRAWINGS

Embodiments of the invention will be described, by way of example, with reference to the following drawings, in which:

Figure 1 is a general view of an example of a satellite with a SAR payload in orbit around the Earth.

Figure 2 is a schematic diagram showing a SAR satellite imaging an area on the Earth's surface.

Figure 3 is a schematic of an example of a computer system that can be used to implement the methods according to this disclosure.

Figure 4 is a flow chart showing an example implementation of how hybrid real-simulated SAR data can be generated and used.

Figure 5 is a flow chart showing the main steps of an example implementation of creating augmented SAR data comprising real SAR data and artificial features.

Figure 6 is a schematic diagram showing how a data tile or a minor portion of SAR real data can be extracted, defocussed, combined with defocussed data of an artificial feature, and inserted back into the original SAR real data.

Figure 7 is a schematic diagram showing the geometry of a side-looking SAR system.

Figure 8a is an example of a focussed SAR SLC image showing amplitude.

Figure 8b shows the amplitude and phase information of the focussed SAR SLC image after defocussing.

Figure 8c shows raw defocussed amplitude and phase information for an example of an artificial feature.

Figure 8d shows the phase information for an example of an artificial feature with the signal originating from the main and two sidelobes of the radar beam identified.

Figure 8e shows the defocussed amplitude and phase information of an example of defocussed augmented SAR data after an artificial feature has been combined with a real feature.

Figure 8f is an image showing an example of the amplitude portion of the focussed augmented SAR data with the real SAR data and several artificial features.

Figure 9a is a SAR image of a stationary target, in this case a ship.

Figure 9b is a SAR image of a moving target, in this case a ship.

Figure 10a is a graph showing an example of the signal power and the receive window versus the ambiguity index number in the range direction.

Figure 10b is a graph showing the signal power reduction compared to the main signal by ambiguity index number after range and azimuth compression.

Figure 11a is an image showing the amplitude portion of real SAR SLC data comprising a real ship.

Figure 11b is an image showing the amplitude portion of the focussed data showing an artificially generated ship.

Common reference numerals are used throughout the figures to indicate similar features.

DETAILED DESCRIPTION

In order to meet the need to provide large amounts of SAR data that can be used, for example, for the development and testing of algorithms or for the training of machine learning models to detect various ambiguities and artifacts, real data can be sourced, analysed, and labelled according to the types of artefacts and features contained within the real imagery that the machine learning model is to be trained to detect and identify. However, this can be difficult, time-consuming, incomplete, and possibly even impossible if SAR data containing the right types of artefacts and features are not readily available.

One way of providing the required data is to provide completely simulated data, whereby the SAR data itself, and any ambiguities therein, are generated artificially (without real data). The simulated environments range over a wide variety of surfaces and man-made artefacts. The simulated data may be provided by electromagnetic-based models and the geometric based models. However, since such models simulate all the data (and thus none of the data is real or based on real data), training or testing the algorithms using the fully simulated data provided by the models may not be adequate. In particular, the algorithms may react or behave differently to the real data compared to the simulated data. In the case of developing or testing analytic algorithms (e.g., for detecting ambiguities or targets), the parameters of the algorithms will likely need to be calibrated to allow them to work in a real environment. In the case of training machine learning models to perform similar tasks, an addition step would be needed to map the simulated environment to the real environment, for example using a simulated-to-real image transformation.

The SAR data used for training a machine learning model should be as realistic as possible, but the presence and position of ambiguities and features in the data should be known and modifiable to provide the capability of assessing the algorithms in different scenarios. It has thus been considered that there is a need to provide artificial data for the purposes of generating large datasets for training and/or testing purposes, wherein the artificial data more accurately represents real data.

This application relates to augmenting real SAR data with additional SAR data of one or more features and provides a computer implemented method, data, computer readable medium, and a computing system for performing data processing and/or image processing for generating such augmented SAR data. The additional SAR data could be generated specifically for insertion into the real SAR data and the related features are referred to here as artificial features. Alternatively they could be real features taken from other SAR data. The data of one or more features are inserted or combined into the real SAR data as raw or defocussed SAR data in a manner that preserves and maintains the complex nature of the SAR data, comprising both amplitude and phase, to make the augmented SAR data more realistic.

The capability of augmenting real SAR data to include artificial features, and thus to simulate the existence of such features in real SAR data, is a very useful tool that can be used to quickly and efficiently obtain realistic augmented SAR data with one or more artificial features inserted, for testing and training purposes.

The augmented real SAR data, whether augmented using real or artificial features, can then be used in the development and calibration of algorithms, for example algorithms to detect and/or suppress certain undesirable features in SAR data, as well as for training of machine learning and AI models to perform similar tasks. Being able to augment real data with e.g. artificial features provides the possibility of inserting artificial or other features into many different combinations of real SAR background data (different environments, surfaces, materials, natural features etc.) to form realistic augmented SAR data. The artificial features may include any one or more of ambiguities, artefacts, simple (point-like) features, complex (multiple points and/or moving) features, as well as radio frequency interference. This can ultimately be used to populate a diverse training library of different scenarios, for training and testing purposes.

Artificial features or real features from other SAR data could be added directly to real defocussed SAR data (e.g., raw SAR data before it has been focussed). The defocussed hybrid real-simulated SAR data (defocussed augmented real SAR data) can then be processed back into an image by focussing the data to form focussed augmented SAR data, while maintaining the complex nature of the SAR data and retaining both amplitude and phase.

The following discussion centers on artificial features but it will be appreciated that it may be equally applicable to real features taken from other SAR data.

In some examples, artificial features are added to real SAR Single Look Complex (SLC) data, which comprises real SAR data that has already been focussed, also referred to here as "previously focussed" but applying this to other types of real SAR data is also possible, for example such as multi-looked data, or to real SAR data stored in formats other than SLC, for example the SICD (Sensor Independent Complex Data) format. The methods and systems allow a user or other process to define a background from real SAR data and then add any combination of artificial features as desired into the real SAR data. The artificial features can be generated from simulation models, or in some examples they can be based on real backscatter data from collected SAR images. The artificial feature may comprise features such as targets (stationary or moving), artefacts such as azimuth and range ambiguities, radio frequency interference (RFI), and background patterns, and can be combined with the real SAR data according to the example processes disclosed herein.

Embodiments of the present invention are described below by way of example only. The description sets forth the functions of the example and the sequence of steps for constructing and operating the example. However, the same or equivalent functions and sequences may be accomplished by different examples.

The methods and systems described herein use Synthetic-Aperture Radar (SAR) data, obtained from a SAR system such as a satellite. SAR is particularly appropriate for use in satellite-based imaging systems because it is able to "see through" opaque atmospheric structures such as cloud cover and smoke from fires to directly image the surface of the Earth. The SAR data is spatial and can thus be processed by focussing to represent an area of interest being observed as a focussed SAR image that contains both amplitude and phase.

SAR imaging is different from and functions differently from optical imaging. Optical imaging simply captures values of brightness (and possibly colour), for each pixel, for example through the use of digital camera containing a CCD (charge coupled device) to detect light. SAR imaging, on the other hand, is more akin to sonar than to optical imaging. Instead of capturing light to form an image, SAR sends out a radar signal in pulses and captures backscattered and reflected radar returns. The time required for each radar pulse to travel to the target and to be "echoed" back is measured and represents the distance of a particular point in the target area from the satellite. All these radar returns form a complex signal and can be processed or focussed to create the SAR data that forms the basis of a SAR image, such as a SAR SLC image.

Generating simulated raw or defocussed data requires creating the radar returns that would give rise to the artificial features desired, including both phase and amplitude. By nature, SAR is much more complex than optical imaging, but can have numerous advantages over optical imagery, as described above.

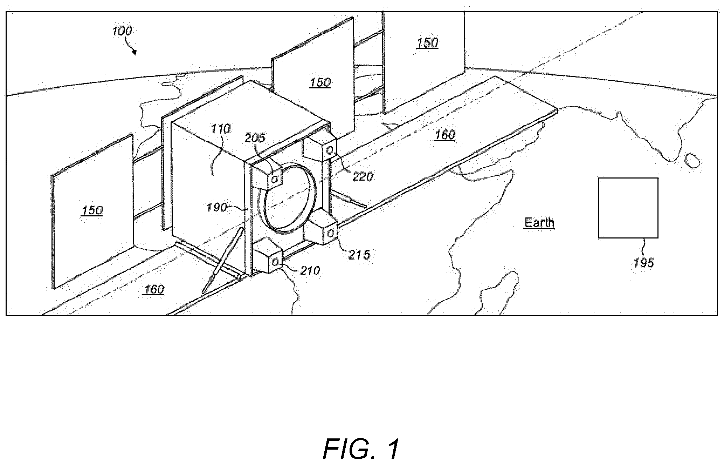

Figure 1 is a perspective view of an exemplary satellite 100 in orbit over Earth, that may be used to obtain SAR data. The satellite 100 comprises a body 110 and "wings" 160. One or more SAR antennas may be mounted on the satellite wings. In this example, the SAR antenna is a phased-array antenna. Other SAR configurations are also possible, such as a reflector-based antenna. The satellite 100 additionally comprises a propulsion system 190 shown to be mounted on the body 110 on the surface opposite the solar panels 150. The propulsion system can comprise thrusters 35, 210, 215, 220, which are part of the system for operating and manoeuvring the satellite 100 to position it appropriately for capturing SAR imagery of the Earth. A computing system may be housed in the satellite body 110 which may be configured to implement some or all of the operations described here. The satellite 100 is configured to communicate with a ground station and/or computing systems 195, distributed computing systems or servers, which are configured to post-process the raw or unfocussed SAR data received from the satellite 110, for example by focussing the SAR data.

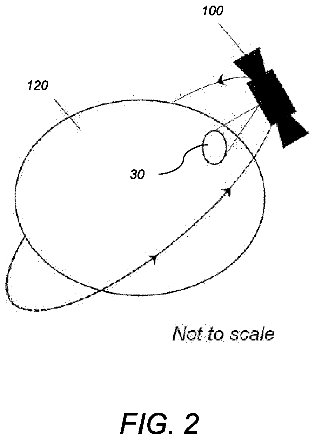

Figure 2 depicts a schematic of the satellite 100 in orbit around the Earth 120 collecting SAR image data. The satellite 100 images a target on the Earth corresponding to an area of interest 140, such as a watershed, a lake, a rural environment, an urban environment or any other landscape of interest. The SAR images may be an image of an area of 1 square kilometre or more, 10 square kilometres or more, 50 square kilometres or more, 100 square kilometres or more, 1000 square kilometres or more, 5000 square kilometres or more, or 10 000 square kilometres or more. For example, the SAR images may be of a 5-Kilometre x 5-Kilometre area of interest. Even with subject sizes of such a large area, spatial resolution of features can be highly accurate with SAR data, capable of detecting features of sizes of 0.1 metres or less, 0.5 metres or less, 1 metre or less, 5 metres or less, 10 metres or less, or 50 metres or less.

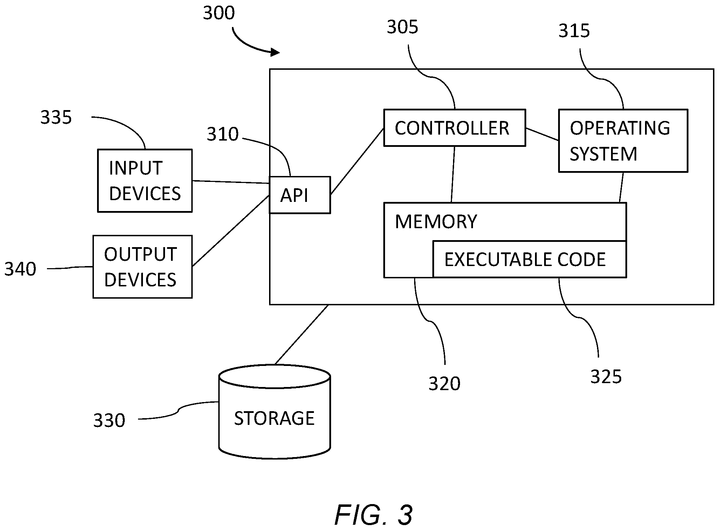

Figure 3 shows a computing system 300 according to various embodiments, on which any of the above-described methods may be performed. In particular, the computing system 300 may comprise a single computing device or components such as a laptop, tablet, desktop or other computing device. Alternatively functions of system 300 may be distributed across multiple computing devices.

The computing system 300 may include one or more controllers such as controller 305 that may be, for example, a central processing unit processor (CPU), a graphics processing unit (GPU) a chip or any suitable processor or computing or computational device such as an FPGA,, an operating system 315, a memory 320 storing executable code 325, storage 330 which may be external to the system or embedded in memory 320, one or more input devices 335 and one or more output devices 340.

One or more processors in one or more controllers such as controller 305 may be configured to carry out any of the methods described here. For example, one or more processors within controller 305 may be connected to memory 320 storing software or instructions that, when executed by the one or more processors, cause the one or more processors to carry out a method according to some embodiments of the present invention. Controller 305 or a central processing unit within controller 305 may be configured, for example, using instructions stored in memory 320, to perform the method as described above.

SAR data may be received at a processor comprised in the controller 305 which then controls the subsequent operations of the above-described methods according to one or more commands or processes which may be stored as part of the executable code 325.

Input devices 335 may be or may include a mouse, a keyboard, a touch screen or pad or any suitable input device. It will be recognized that any suitable number of input devices may be operatively connected to computing system, for example via an API 310. Output devices 340 may include one or more displays, speakers and/or any other suitable output devices. It will be recognized that any suitable number of output devices may be operatively connected to computing system 300 as shown by block 340. The input and output devices may for example be used to enable a user to select information, e.g., images and graphs as shown here, to be displayed.

A method of creating hybrid SAR data combining real SAR images and artificial features according to various embodiments will now be described.

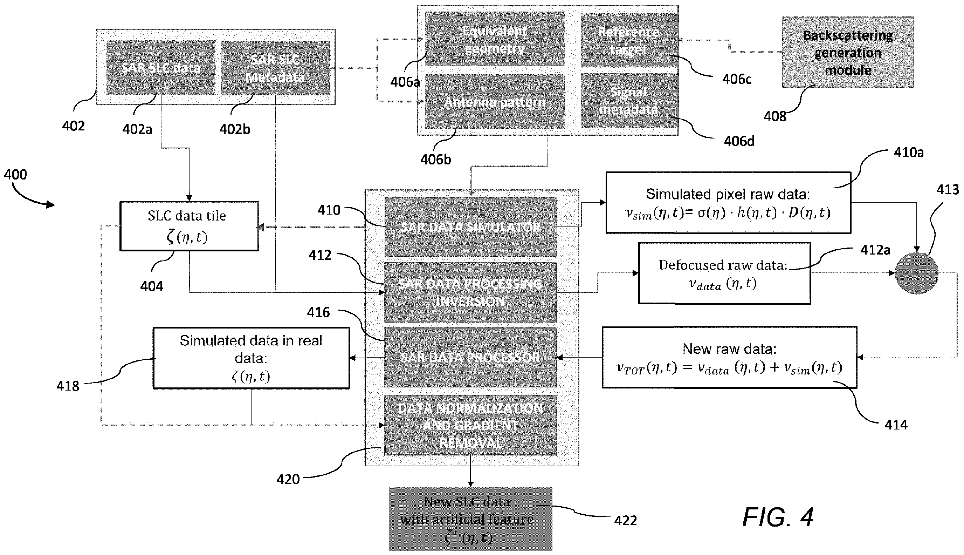

Figure 4 is a flow diagram 400 showing an example of how hybrid real-simulated augmented SAR data according to the current description can be created, using a specific example of Single Look Complex (SAR SLC) data.

Inputs 402 to the method include Synthetic Aperture Radar Single Look Complex (SAR SLC) data 402a and SAR SLC metadata 402b. SAR SLC data 402a is real SAR data that has already been focussed (processed) from the raw radar signals into an image with only a single look, meaning that the image retains full resolution in azimuth and range. The SAR SLC metadata 402b comprises information regarding the SAR SLC data 402a, including parameters such as the relative velocity of the satellite compared to the target, geometric parameters of the image such as the satellite altitude, the incidence angle, the slant range, and antenna pattern parameters. In several embodiments, the metadata 402b can also comprise radar parameters, corresponding to the radar used to obtain the SAR SLC data 402a. These radar parameters may include wavelength, range sample frequency, pulse bandwidth, pulse time, chirp slope, and Pulse Repetition Frequency, for example.

The metadata 402b may also include processing parameters that are used to process the raw unfocussed SAR data to obtain the focussed SAR SLC data 402a. The processing parameters may include information regarding the Processed Doppler bandwidth, the Doppler centroid, and the Doppler rate, for use in processing the raw unfocussed SAR data, for example.

The SAR SLC metadata 402b may further include antenna parameters corresponding to the antenna used to capture the raw data used to form the SAR SLC data 402a. The antenna parameters may include antenna length and width. This may be used to approximate the theoretical antenna directivity. Alternatively, the real measured antenna pattern profile may be determined.

The SAR SLC metadata 402b may further include acquisition parameters, corresponding to the conditions at which the raw data corresponding to the SAR SLC data 402a was captured. The acquisition parameters may include: incidence angle, and the orbital state vector (needed to calculate the relative velocity between target and radar), target coordinates in range and azimuth, a backscattering coefficient (which can be a scale factor or a space variant parameter), velocity in range and azimuth (if the target is a moving target), a specific area of interest of the antenna pattern (such as the sidelobes/main lobe of the antenna pattern). There may also be some parameters dedicated for RFI/Range ambiguities.

The SLC metadata 402b is used to determine an input to a SAR data simulator module 410 (also referred to as a 'simulator'), for generating the unfocussed or defocussed data for an artificial feature 410a according to the parameters of the SAR SLC data 402a as indicated by the SLC metadata 402b. Note that raw and unfocussed or defocussed are considered to be the same thing for the purpose of this application, meaning that the SAR data is either in raw form before focussing, or has been defocussed so that it is similar to raw defocussed SAR data (e.g., pseudo-raw defocussed SAR data). In particular, geometry parameters 406a, antenna pattern parameters 406b, reference target parameters 406c and signal metadata 406d are used as input data to the SAR data simulator 410. Examples of reference target parameters 406c include the type of artificial feature to be generated, ambiguity levels, etc. All of this information is important input for the SAR data simulator 410 because the SAR data simulator 410 needs to generate the raw defocussed SAR data of an artefact or other artificial feature to appear as if it were taken from a similar location and angle using a similar antenna and under similar conditions as the real SAR SLC data that the artificial features will ultimately be added to.

SAR data is complex data consisting of amplitude (intensity) and phase components represented as complex numbers for each pixel. According to the current disclosure real SAR SLC data and the artificial SAR data are combined as raw defocussed SAR data. Combining the artificial feature with the real SAR data as raw or defocussed data is important because the complex nature of the SAR data (including both amplitude and phase are maintained. For example, this is distinct from creating an image of an artificial feature and pasting it into a SAR image formed from already-focussed SAR data, because the phase information cannot be properly maintained and combined in this way. This might work with an optical image or a photograph, because in these images there is only amplitude information and no phase information, but the result is not as good a representation of real SAR data. Complex SAR data that includes both amplitude and phase can provide higher levels of information and resolution than can optical techniques, and also enable very sensitive coherent change detection techniques such as interferometric SAR.

An optional backscattering generation module 408 can be used to produce background data for the purposes of generating the artificial feature 410a. In an example, an artificial target may be a ship, and it may be desirable to generate a realistic background for the ship, such as the sea. The backscattering generation module 408 can be used to simulate the backscattered radar signals from the surface of a sea. The backscattering generation module 408 may provide a scale factor (a number) that multiplies the matrix of the simulated raw pixel data of the artificial feature 410a, or it can be a space variant parameter, as in case of approximation of distributed targets as a sea surface. In this case, the backscattering is a complex matrix with the same size of the simulated pixel raw data of the artificial feature 410a.

It is to be understood that, whilst this description refers to a SAR simulator 410, in reality this module is a module for generating artificial data for inputting into the real SAR SLC data 402a, to augment the SAR SLC data 402a with one or more artificial features 410a. The one or more artificial features 410a may, in some embodiments 'simulate' the existence of a physical feature in the SAR SLC data, such as an object (ship, house, building etc.), landmark (city, road etc.) or other environmental feature (forest, river, lake etc.). The artificial feature 410a may also 'simulate' azimuth and range ambiguities, and artefacts such as radio interference ambiguity. Thus, although this description refers to a simulator, the real SAR SLC data 402a is actually modified (via data/image processing) to include real artificial data. The word 'simulator' and 'simulation' merely refers to the context in that the artificial data itself is not the same or is otherwise not sourced from (is not originally found in) the SAR SLC data 402a, instead, it is artificially implanted into the SAR SLC data 402a. As an alternative to generating the artificial data, real SAR data from another source could also be used and inserted into the real SAR SLC data 402a.

The method involves two main processes. The first of these is the generation of the artificial feature 410a. As illustrated by figure 4, the generation of the artificial feature 410a involves the generation of raw pixel data, by the SAR data simulator 410, based on an input including one or more of geometry parameters 406a, antenna pattern parameters 406b, reference target parameters 406c and signal metadata 406d, which are obtained with respect to the SAR SLC metadata 402b. As such, the process of generating the raw data for artificial feature 410a depends on the SAR SLC metadata 402b relating to the SAR SLC data 402a (real SAR data). Different parameters are selected according to the type of artificial feature 410a to be generated, as will be understood. In an example, SAR data simulator 410 is implemented for different SAR acquisition modes (such as Stripmap mode and Spotlight mode) in Matlab to generate the raw data for targets and image artifacts (ambiguities). Alternatively, the SAR data simulator 410 can be implemented using Python or other software means.

The second process is the selection of data from the SAR SLC data 402a to determine a SLC data tile 404, and subsequent inversion of this selection by a SAR data processing inversion module 412 to form defocussed raw data 412a. The SAR data processing inversion 412 converts the SAR SLC data back into defocussed raw data 412a, which is then combined with the artificial feature 410a. Combining the SAR SLC data with the artificial feature data by first converting the SAR SLC data back to raw defocussed SAR data is important because the artificial feature can be combined as raw defocussed SAR data, thus maintaining the complex nature of the SAR data, including the phase. Full resolution and the information contained in the original real SAR SLC data is also maintained, making the hybrid real-simulated augmented data more representative of real SAR imagery. This has benefits over combining a real image with an artificial feature only as an image, or as already focussed SAR SLC data instead of raw unfocussed SAR data, because information could be lost, and the resulting combination would not be as representative of real SAR imagery. The selection of data from the SAR SLC data 402a depends on where in the SAR SLC data 402a the artificial feature 410a is desired to be input, and the size, type and characteristics of the artificial feature 410a to be inserted.

Therefore, the two processes are dependent on each other: the first process, (generating the artificial feature) is dependent on the SAR SLC metadata 402b of the SAR SLC data 402a, whilst the second process (selecting the SAR SLC data to augment) is dependent on the type of artificial features 110a that will be generated. Ultimately, the two processes then intersect in that the defocussed raw data 412a and the artificial feature 410a are combined at 413 to obtain new raw data 414 that includes the real SAR data, augmented with an artificial feature.

In the second process, the selection of SAR SLC data 402a provides an SLC data tile 404, which is effectively a matrix of complex data, obtained from a portion of the whole input SAR SLC data 402a. The selection step is optional but can be performed to reduce the size of the image and/or the computational burden of the process. The SLC data tile 404 is selected based on geometric parameters, depending on where in the SAR SLC data 402a an artificial feature 410a is desired, and could also be based on the type of artificial feature 410a. The size of the SLC data tile 404 is selected to be the same size as the raw data of the artificial feature to be inserted, and thus can depend on the type of artificial feature being inserted. The type of artificial feature being inserted can be specified as an input to the system. Alternatively, the size of the data tile 404 and the size of the artificial data to be added can be specified as an input.

The minimum size of the SLC data tile 404 depends on a minimum number of pixels required in the matrix for successfully modifying and adding the artificial feature 410a. In other words, the minimum size of the SLC data tile 404 is effectively the minimum number of pixels or smallest matrix around a location in the SAR SLC data 402a required to successfully add the desired artificial feature 110a to said location. For example, point targets are the smallest type of artificial feature that might be inserted into the SAR SLC data 402a. In the case of point targets, the minimum size of the SLC data tile 404 is:

In range:

$$L_{chir} = \tau \cdot \mathrm{f}_s$$

where $L_{chirp}$ is the minimum distance in the range direction, $\tau$ pulse time and $\mathrm{f}_s$ range is the sampling frequency in range.

In azimuth:

$$L_{azimuth} = S \cdot \mathrm{PRF}$$

where $L_{azimuth}$ is the minimum distance in the azimuth direction, $S$ is the integration time in sec and PRF the Pulse Repetition Frequency.

The above applies to point targets when only the main lobe of the antenna signal is considered. In the example of extended targets, the size of the simulated raw data is larger in order to take into consideration the size of the target (in range and in azimuth) and so the minimum size of the SLC data tile 404 would have to be larger as well.

Once the SLC data tile 404 is retrieved, it is input to the SAR data processing inversion module 412. The SAR data processing inversion module 412 is configured to, using an inversion function, defocus the SAR SLC data of the SLC data tile 404 to produce the defocussed raw data 412a. This process may include the use of any suitable inversion function, as would be understood. Examples of such inversion functions include Omega k, range doppler, time domain correlation, and the chirp scaling algorithm.

In this example, the SAR data simulator 410 is configured to generate an artificial feature 410a for inputting into SAR SLC data 402a according to the first process. This first process may be performed with, before, after, or separately from the second process of generating the defocussed raw data 412a by the SAR data processing inversion module 412. The artificial feature 410a is generated as raw data, making it compatible for inputting into the defocussed raw data 412a generated according to the inversion function.

Thus, once the artificial feature 410a is generated by the SAR data simulator 410, and the SLC data tile 404 is defocussed by the SAR data processing inversion module 412 via application of the inversion function to produce the defocussed raw data 412a, the artificial feature 410a is combined with the defocussed raw data 412a to obtain new raw data 414. The artificial feature 410a is combined with the defocussed raw data 412a using a combination function 413. Essentially, the combination function 413 sums in the time domain the contribution of the simulated data 410a with the real defocussed raw data 412a in order to obtain the new raw data 414. The combination function 413 is made possible by the superposition principle, which states that for linear systems the net response to two different stimuli is the same as the sum of the response caused by each stimulus by itself.

Once the artificial feature 410a is combined with the defocussed raw data 412a to produce the new raw data 414, the new raw data 414 is then processed by a SAR data processing module 416 to generate preliminary SAR SLC data 418. This preliminary SAR SLC data 418 includes target data corresponding to the raw artificial feature 410a, that augments the original SAR SLC data 402a. The SAR data processing module 416 effectively performs an opposite operation to the SAR data processing inversion module 412 by refocussing the new raw data 414. The refocussing is performed using a function of the same type as the inversion function (an inverse operation is effectively performed). The preliminary SAR SLC data 418 can then be modified by a data normalization and gradient removal module 420 to generate final new SLC data 422, with the artificial feature 410a as a target/ambiguity in the SLC data. In the data normalization and gradient removal module 420, the preliminary SAR SLC data 418 is normalized using the mean of the original SLC data tile 404. The data profile of both the original SLC data tile 404 and the preliminary SAR SLC DATA 418 is calculated in both range and azimuth. The profiling may involve averaging and filtering using, for example, averaging filters and Savitzky-Golay filters. Finally, the preliminary SAR SLC data 418 is normalized based the mean and profile of the original SLC data tile 404 in order to avoid undesired amplitude gradients or differences in the amplitude values between the new SLC data 422 and the original SAR SLC data 402a. This is particularly important if the new SLC data 422 is to be inserted back into the original SAR SLC data 402a or a portion of the original data.

The outcome of this method is thus the new SLC SAR data 422, which corresponds to a modified version of the SLC data tile 404. This can then be re-inserted into the SAR SLC data 402a if required. The new SLC SAR data 422 includes real SAR data with target data/ambiguity data that also appears realistic, and which is suitable for use in a variety of tasks, such as training systems to process SAR SLC data in particular ways. The processing may include processing in the time and image domain. This is made possible due to the insertion of the artificial feature 410a in the defocussed raw data 412a.

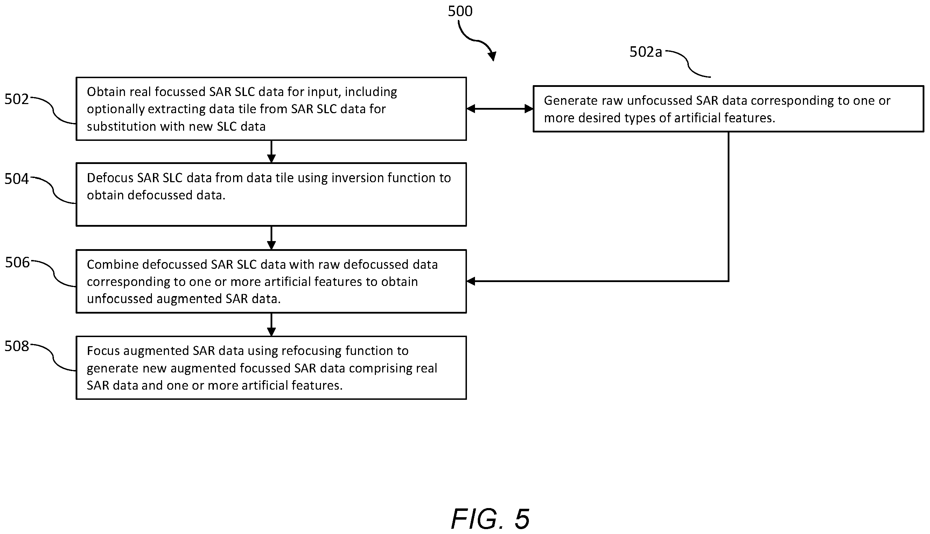

Figure 5 shows a flow diagram of an example method 500 according to the processing discussed above with respect to figure 4. Here again a specific example of SAR SLC data and artificial features is used, but it will be appreciated that unless stated otherwise the same principles may be applied to other kinds of SAR data as discussed elsewhere here, and additional data relating to real features from other SAR data.

In a first step 502, SAR SLC data is obtained as an input for augmentation by the method 500. The SAR SLC data may be obtained directly from the source of the SAR SLC data, such as from the satellite 100 after processing of the raw defocussed SAR data into focussed SAR SLC data, or may be retrieved from computer storage or the like. The SAR SLC data may thus be historic data. To improve computational efficiency, part of the first step 502 may include identifying and extracting a SLC data tile from a portion of the SAR SLC data, such that it is not required to process the entire SAR SLC data matrix obtained in the first step 502.

The first step 502 represents the start of the second process outlined above with respect to figure 4. As explained previously, the selection of the data tile in the first step 502 depends on the type of artificial feature to be combined with data tile, its size, and its intended position in the original SAR SLC data. As such, the first step 502 is dependent on the type of artificial feature being created in separate step 502a.

In the separate step 502a, raw data is generated according to a desired type and size of artificial feature to be added. This separate step 502a is dependent on the metadata of the SAR SLC data.

In a second step 504, the SAR SLC data obtained as the input (or the data tile extracted from it) is defocussed using an inversion function, to produce defocussed raw data. Examples of such inversion functions include Omega k, range doppler, time domain correlation, and the chirp scaling algorithm as mentioned above. The SAR SLC data is defocussed in range and in azimuth directions using the inversion function. Range migration compensation performed during the original SAR processing to focus the raw SAR data into focussed SLC data is not reverted, allowing for the range and azimuth variables to be decoupled.

In a third step 506, one or more artificial features generated according to the separate step 502a are combined with the raw defocussed real SAR data. This step is performed by combining the two sets of defocussed data to obtain augmented defocussed SAR data. The far defocussed SAR data from the real SAR data and the defocussed SAR data of one or more artificial features are summed according to the overlapping and sum principle, otherwise known as the superposition principle, as described above. This provides the new augmented defocussed SAR data, which is a combination of the defocussed real SAR data and the defocussed SAR data of one or more artificial features. The new focussed augmented SAR data can then be focussed, for example into the SAR SLC format, and may be output or saved in this form.

Optionally, in a fourth step 508, the new raw data is refocussed using the inverse of the inversion function as used in the second step 504. This is referred to as a focussing function. In an example, the focusing function is a is a phase filter, for example:

$$h = \exp\left(-i\Phi_{filter}\right)$$

where $h$ is a general expression of the filter that performs the focussing of the combined SAR data, and

$$h_{inv} = \exp\left(i\Phi_{filter}\right)$$

where $h_{inv}$ is the conjugate of $h$, otherwise known as the inverse of $h$, and is the general expression of the filter that was used for defocussing the real SAR data.

Refocussing the combined data generates focussed or SLC data that now includes the artificial feature. If an SLC data tile was extracted in the first step 502, then this new SLC data may be reinserted into the original SAR SLC data matrix, taking the place of the original SLC data tile. This provides a useful tool for creation of on-demand realistic scenarios and for generation of specific targets for training data set generation, for example. Such a tool can also be used in test environments, for example, when testing and validating existing and new algorithms. This method allows any desired feature or artefact to be artificially inserted in real images and saved as SLC data, for example in a HDF5 (Hierarchical Data Format) format commonly used for SAR SLC data, for example in applications such as MATLAB where H5 files store data in HDF5 format adhering to HDFT file format specifications.

Optionally, the new SLC data may then be subject of normalization and gradient removal. This was previously described with respect to data normalization and gradient removal module 420. The benefit of the data normalization and gradient removal is to make the preliminary SAR SLC data blend back in better with the original SLC data. For example, if each pixel in the new SAR SLC data has a higher average amplitude (e.g., due to combining in the data from the artificial feature, which may have its own background amplitude), the overall level can be reduced in order to match with the level of the original SLC data. Similarly, gradients can be removed in order to match the profile of the original data. This makes it harder to distinguish the replaced SLC data tile from the rest of the original image (SAR SLC data 402a) and makes the result more realistic. In an example, training a machine learning model with hybrid real-simulated SAR data that has not been normalized may inadvertently train the machine learning module to look for ambiguities based on difference in amplitude of a rectangular data tile, which of course will not exist in real SAR data.

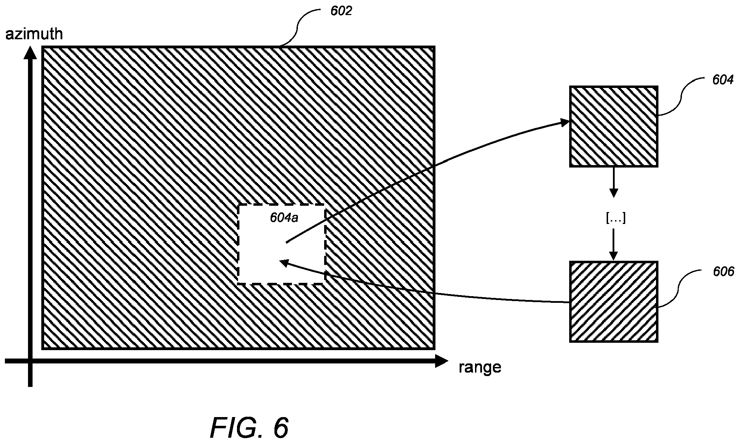

Figure 6 shows an image from SAR SLC data 602, having azimuth and range directions. Whilst it is possible to use all of the SAR SLC data 602 as an input in the first step 502 of the method 500, it is advantageous to input the minimum number of pixels or data points required to accurately introduce the artificial feature to the SAR SLC data 602. As explained above, this is dependent on the size, desired position, and complexity of the type of artificial feature. Larger and/or more complex artificial features, such as moving targets or multiple-point features, require a larger minimum number of pixels. Once the minimum has been determined, and the location in the SAR SLC data at which the artificial feature is desired is determined, a SLC data tile 604 may be extracted from an area 604a of the SAR SLC data for the purposes of augmenting the SLR data tile 604 with the artificial feature(s). Note in the case of radio frequency interference being the artificial feature to be added to the real SAR data, the entire SLC image would be affected. As such, it may be desirable for the size of the data tile to be the entire image to accurately represent this. Otherwise, just a portion of the resultant combined new SLC data would have RFI artifacts in it.

Figure 6 also shows new SLC data 606, generated by performing the remaining second, third and fourth steps of the method 500 on the SLC data tile 604. The new SLC data 606 represents the original SAR SLC data from the SLC data tile 604, augmented with one or more artificial features. The new SLC data 606 including the artificial features may then be substituted back into the area 604a in the SAR SLC data 602 to form part of the entire data matrix.

The example of method 500 will now be explained in more detail. Firstly, step 502 describes obtaining SAR SLC data for input. SAR SLC data is generated from raw defocussed SAR data acquired by the satellite SAR system by the process known as focussing. Since raw defocussed SAR data is a signal containing a string of pulses representing the backscattered and reflected radar signals, it needs to be focussed before an image can be formed from it. In other words, it needs to be decoded in order to separate out the returned energy into pixels representing points in the image. Once focussed, the SAR data can be one of a number of formats. One common format for focussed is SAR SLC data. A key aspect of SAR SLC data is that it retains the complex nature of the SAR data and contains both amplitude and phase information for each pixel, which is different from a normal image that only has amplitude or intensity information and possibly colour information for each pixel.

The data for a single pixel in a SAR SLC data image can be generated starting from the uncompressed Impulse Response Function (IRF) of the SAR system. For each pixel the SAR IRF represents the spatial distribution of the energy in the bi-dimensional space. The received baseband signal of a point target has the following expression:

$$h(\eta, t) = A exp\left[-j4\pi \frac{R(\eta)-R_0}{\lambda}\right] \cdot exp\left\{j\pi\left[\frac{-B}{2} + K\left[t - 2\frac{R(\eta)-R_0}{c}\right]^2\right]\right\}. \tag{1}$$

$$\text{with } \left|t - 2\frac{R(\eta)}{c}\right| \leq \frac{\tau}{2} \text{ and } |\eta - \eta_c| \leq \frac{S}{2},$$

where the t and $\eta$ are, respectively, the range time and the azimuth time at zero Doppler, $\tau$ is the chirp time, S the integration time, $\lambda$ the wavelength and K the chirp rate. The second exponential shows how the range and azimuth variables are coupled.

Let $l_{rg}$ and $l_{az}$ respectively be the impulse response of the range filter and of the azimuth filter corresponding to the complex conjugate of the corresponding signals in range and azimuth, wherein:

$$l_{rg}(t) = exp\left\{-j\pi\left[\frac{-B}{2} + Kt^2\right]\right\} \tag{2}$$

$$l_{az}(\eta) = exp\left[j4\pi \frac{R(\eta)-R_0}{\lambda}\right] \tag{3}$$

Note that the range and azimuth variables are coupled, and as such the range and azimuth compression cannot be performed independently due to the range migration effect. However, dedicated techniques for Range Migration Compensation (RMC), such as range interpolation using algorithms such as Range Doppler or Time domain correlation and the Stolt mapping for the $\omega$-k algorithm can be used to decouple the compression in range and azimuth.

The range compression is performed by the correlation between the signal and the impulse response in range, that corresponds to the product in the frequency domain:

$$g(\eta, t) = \int_{t-\frac{\tau}{2}}^{t+\frac{\tau}{2}} h(\eta, t)l_{rg}(t' - t)dt' = IFFT\left(H(\eta, f) \cdot L_{rg}(f)\right) \tag{4}$$

The RMC allows for compensation of the range migration from the zero Doppler and cancels the coupling of range and azimuth signals. After the RMC, the range compressed data are $g(\eta,t) \rightarrow g'(\eta,t)$. The azimuth compression can be performed by using the azimuth reference filter:

$$\zeta(\eta'_c,t) = \int_{\eta_c-\frac{S}{2}}^{\eta_c+\frac{S}{2}} g'(\eta,t)\, l_{az}(\eta-\eta'_c)d\eta = IFFT\big(G'(f_D,t)\cdot L_{az}(f_D)\big) \tag{5}$$

In the second step 504 of Figure 5 described above, the SAR SLC data (or a data tile extracted from the SAR SLC data, as shown in Figure 6) is defocussed to generate defocussed raw data. It is to be understood that this is not necessarily the same as the original raw data that the SAR SLC data was originally derived from. The process of generating the SAR SLC data from the original raw data is irreversible, and as such, the defocussed raw data is effectively pseudo-raw data generated by applying an inversion function to the SAR SLC data. Several inversion functions are possible to defocus the SAR SLC data. The inverse function of the chosen inversion function can then be used for refocussing the new SLC data in step 508. This is outlined below.

In an example, the defocussing may be performed with the following reference inversion functions in range and azimuth, with the exponential sign inverted.

$$g'(\eta\ t) = IFFT_{az}\left(Z(f_D\ t)\cdot L_{az}(f_D)\right) \tag{6}$$

$$v_{data}(\eta\ t) = IFFT_{rg}\left(G'(\eta\ f)\cdot L_{rg}(f)\right) \tag{7}$$

Note that the range migration compensation performed by a SAR processor to convert the raw defocussed SAR data into the original focussed SAR SLC data 402a is *not* reverted. For this reason, the data can be defocussed in range and azimuth independently, without considering the coupling of the two variables. The non-reversion of the range migration compensation is taken into account in the generation of the artificial feature raw data, by substituting $R_{res}$ to the range migration term.

In the third step 506 describe above, one or more artificial features are inserted into the defocussed raw data to obtain new raw data. In order to insert the artificial features, it is first necessary to generate raw data required for the desired artificial feature in the separate step 502a. As explained above, the artificial feature 410a may be one or more of many different types of artificial features 410a. Artificial features described include point targets, azimuth ambiguities, complex targets, moving targets, range ambiguities, and radio frequency interference (RFI). Other types of artificial features could also be generated and inserted into real data in a similar manner.

The generation of raw data firstly depends directly on the SAR SLC data which is to form the background on which the artificial feature is to be imparted. As indicated in figure 4, SAR SLC metadata 402b, which comprises equivalent geometry 406a and antenna pattern data 406b, can be used in conjunction with reference target 406c and signal metadata 406d as inputs to inform the process of generating the raw data associated with the artificial feature. This process of relying on metadata of the original SAR SLC data ensures that the artificial feature is an accurate simulation of that feature and is close as possible to if the feature was actually part of the original SAR SLC data being used. In other words, the artificial feature will appear as if it were taken from the same imaging geometry with the same antenna pattern as the original SAR SLC data was taken from.

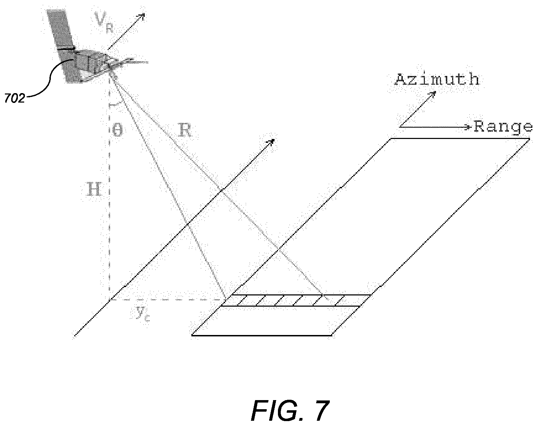

Figure 7 shows a diagram indicating how the equivalent geometry 406a is used in the generation of raw data corresponding to the artificial feature. The SAR data simulator 410 works in an equivalent geometry 406a calculated from the SAR SLC metadata 402b. The equivalent geometry assumes that the monitored surface is considered flat, and the velocity of the satellite 702 is equal to the relative velocity between radar and observed surface $V_R$. The slant range R, the incidence angle $\theta$, the satellite altitude H, the Doppler centroid and the Doppler rate for each pixel are calculated from the metadata. The equivalent geometry is used so that the artificial feature created by the SAR data simulator 410 will appear to be taken from the same height, at the same incidence angle, and with the same slant range as the original SAR SLC data that the artificial feature is to be inserted into. In figure 7, $y_c$ is the distance between the nadir pixel and the ground.

The slant range model used for the SAR data simulator 410 follows the geometry shown in figure 7. In particular, the slant range $R(\eta)$ as a function of azimuth time $\eta$ during the integration time period is given as:

$$R(\eta) = \sqrt{[V_R\cdot(\eta-\eta_c)]^2 + y_c^2 + H^2}. \tag{8}$$

$$|\eta - \eta_c| = \frac{s}{2}$$

where the azimuth time is .

If $f_{DC}$ and $f_R$ are respectively the Doppler centroid and the Doppler rate, where $f_R = \frac{2V_R^2}{\lambda \cdot R_0}$, and the zero Doppler corresponds to the time $\eta_c = \frac{f_{Dc}}{f_R}$, and if the target moves with azimuth and range velocity respectively $V_{az}$ and $V_{rg}$, equation (6) above becomes:

$$R_{MT}(\eta) = \sqrt{[(V_R - V_{az}) \cdot (\eta - \eta_c)]^2 + \left[y_c + V_{rg} \cdot (\eta - \eta_c)\right]^2 + H^2}. \qquad (9)$$

where the Doppler parameters become:

$$f_{Dc}^{MT} = f_{Dc} - \frac{2}{\lambda} V_{rg} \cdot sin\theta \qquad (10)$$

and

$$f_R^{MT} = \frac{2(V_R - V_{az})^2}{\lambda \cdot R_0} \qquad (11)$$

If the simulated target is an azimuth ambiguity, the azimuth time $\eta_{amb}$ needs to be increased in order to take into account the sidelobes of the antenna pattern, and the temporal variable becomes: $\eta_{amb} = \eta - \eta_c \pm \Delta\eta$, where $\Delta\eta$ refers to the time reference for the ambiguity, for which the Doppler frequency is $f_D' = f_D \pm k \cdot PRF$, where PRF is the Pulse Repetition Frequency and k is an integer number that is related to the order of ambiguity and the range migration becomes:

$$R_{AMB}(\eta) = \sqrt{[V_R \cdot (\eta_{amb})]^2 + y_c^2 + H^2} \qquad (12)$$

The radar used for SAR is a directional beam directed in a side-looking manner as shown in Figure 7. The ideal radar beam would be one in which all the energy is directed from the satellite to the ground in a single contained beam. In reality, the directed radar is rarely a perfect beam and usually contains sidelobes that land outside of the target area. These sidelobes can commonly give rise to ambiguities in SAR images because energy is reflected back from these side lobes and can give rise to features or duplicate features in a SAR image that are not actually there or are in the wrong place. It is desirable to remove the ambiguities resulting from radar returns coming from the sidelobes of the radar beam, and as such it is useful to be able to artificially simulate these ambiguities and to put them into real SAR data for the purposes of developing and calibrating algorithms for the removal of such ambiguities, and also for training machine learning models intended to perform the same function.

The second part of the metadata 402b is the antenna pattern 406b. The SAR signal corresponding to the SAR SLC data 402a is modulated by the bi-dimensional antenna pattern 406b, which defines how the transmitted energy is distributed in space. The antenna pattern 406b, defined with the typical sinc-shape, introduces the amplitude modulation of a two-ways signal that is processed to generate the focussed SAR SLC data 402a. As mentioned above, the sidelobes of the antenna pattern 406b are usually responsible for ambiguities that are generated in the focusing of the SAR data.

If for example, an antenna with length $L_a$ and height $L_h$ is considered. The antenna pattern 406b is related to the antenna size and to the wavelength, where, for a uniformly illuminated rectangular aperture, the directivity pattern function is:

$$D(\theta, \varphi) = \left(\frac{1}{L_a \cdot L_h}\right)^2 \cdot \left|\int_{-\frac{L_a}{2}}^{+\frac{L_a}{2}} \int_{-\frac{L_h}{2}}^{\frac{L_h}{2}} exp[jk\,sin\,\theta \cdot (x\,cos\,\varphi + y\,sin\,\varphi)]\,dxdy\right|^2 \qquad (13)$$

where $\theta$ and $\Phi$ are respectively azimuth and elevation angles. Decoupling the contributions in range and azimuth:

$$D(\theta \; \varphi) = sinc^2\left[k\frac{L_a}{2}sin\,\theta\,cos\,\varphi\right] \cdot sinc^2\left[k\frac{L_h}{2}sin\,\theta\,sin\,\varphi\right]. \qquad (14)$$

Considering the relation between azimuth angle and azimuth time $\theta = tan^{-1}\left(\frac{V_{st}(s-s_c)}{R_c}\right)$, the antenna pattern becomes:

$$D(s\ \varphi) = \text{sinc}^2\left[k\frac{L_a}{2}tan^{-1}\left(\frac{V_R}{R_0}\eta\right)cos\ \varphi\right] \cdot \text{sinc}^2\left[k\frac{L_h}{2}tan^{-1}\left(\frac{V_R}{R_0}\eta\right)sin\ \varphi\right] \tag{15}$$

If the antenna pattern 406b is defined for the angular coordinates corresponding to the ambiguities, it also allows for modulation of the ambiguous signals. In other words, the signals may be generated in the ambiguous range, given by the sidelobe position of the antenna pattern.

In step 502a of Figure 5, the SAR data simulator 410 of Figure 4 generates the raw data for simulating an artificial feature.

To generate the raw data for point targets, complex or extended targets, moving targets, and azimuth ambiguities, the following equations are used. These equations are used to create the raw data representing these artificial features. The raw data is essentially a time sequence of pulses simulating the SAR echo returns that would be recorded by the satellite according to the geometry, antenna pattern, and signal parameters of the original SAR SLC data. This complex band-based signal simulates the contribution from all the pixels belonging to the artificial feature and is given as:

$$v_{sim}(\eta, t) = \sigma_{i,j}(\eta, t) \cdot h_{i,j}(\eta, t) \cdot D_{i,j}(\eta, t) \tag{16}$$

Where $\sigma$ is the Radar Cross Section (RCS), $h$ is the uncompressed (defocussed) Impulse Response Function (IRF) and $D$ is the antenna pattern. The antenna pattern can be the measured antenna pattern 406b or a theoretical antenna pattern of the antenna used to collect the original raw data. In this equation, $\sigma_{i,j}$ represents the amplitude and the phase of the backscattering coefficient, if used, $h_{i,j}$ arises from the velocity and orientation of the satellite, and $D_{i,j}$ represents the main lobes and the sidelobes of the antenna pattern.

The antenna pattern plays an important role in the generation of the artificial features such as ambiguities, because the definition of the sidelobes of the radar beam allows the representation of these types of artifacts. The contribution $\sigma$ allows one to specify the amplitude and phase of the backscattering coefficient, with the aim or simulating targets as artificial features with particular geometries, non-coherent surfaces, such as the sea surface in the presence of wind and waves and sub-pixel characterization, allowing the simulation of phenomena such as the speckle.

For generating the raw data for artificial features, the uncompressed IRF $h_{i,j}$ can be used with a modification compared with eq. 1 to take into account the Range Migration Compensation that was originally performed to form the SAR SLC data, and the motion of the target.

For simulating stationary and moving targets, the modified IRF $h_{i,j}(\eta,t)$ is thus:

$$h_{i,j}(\eta, t) = \begin{cases} Aexp\left[-j4\pi\frac{R(\eta)-R_0}{\lambda}\right] \cdot exp\left\{j\pi\left[\frac{-B}{2} + Kt^2\right]\right\} for\ stationary\ targets \\ Aexp\left[-j4\pi\frac{R_{MT}(\eta)-R_0}{\lambda}\right] \cdot exp\left\{j\pi\left[\frac{-B}{2} + K\left[t - 2\frac{R_{res}(\eta)}{c}\right]^2\right]\right\} for\ moving\ targets \end{cases} \tag{17}$$

Where $R_{res}$ is the residual range migration and is defined as:

$$R_{res}(s) = \begin{cases} R(\eta) - R_{MT}(\eta) for\ moving\ targets \\ R(\eta) - R_{AMB}(\eta) for\ azimuth\ ambiguities \end{cases} \tag{18}$$

Azimuth ambiguities of point targets can be generated if sidelobes are included in the definition of the antenna pattern. Note that range ambiguities (ambiguities occuring due to side lobes in the range direction) are generated in a different manner and are described below.

If the target is an extended target, meaning that it covers more than one pixel in an image, it can be viewed as a collection of point targets and the raw data of all the pixels are summed according to the overlapping and sum principle:

$$v'(\eta, t) = \sum_{i=1}^{AzLines} \sum_{j=1}^{RgSamples} v_{ij}(\eta, t). \tag{19}$$

In another example, range ambiguities can also be generated as an artificial feature. Typically, a SAR system transmits radio-frequency radiation in pulses and the records the returning echoes. A possible consequence of the pulsed operation of SAR is that azimuth and range ambiguities can arise in the image, for example from radar echoes backscattered from the nadir and other points not in the target imaging area, either by the main lobe of the beam or the side lobes of the beam. As described previously, ambiguities can arise because it is difficult to perfectly direct a radar beam only to the target image area. In reality, the radar beam has side lobes that also illuminate areas outside of the desired imaging area, and result in radar echoes from these "ambiguous" areas that are then mixed in with the returns from the "unambiguous" areas.

Range ambiguities are different from azimuth ambiguities because azimuth ambiguities involve movement of the satellite in the azimuth direction, whereas range ambiguities arise in the direction perpendicular to the motion of the satellite (no doppler effect). Range ambiguities arise from radar echoes coming from both the main lobe and from side lobes in the range direction, including areas closer to and further away from the area being targeted. These echoes of the previous and later transmitted pulses scattered from undesired regions (e.g., regions not being imaged) can also include the nadir, which is the point directly below the SAR satellite at its current location. In this case, the SAR image is a combination of an unambiguous image (the desired image), a partially focussed ambiguous image, and the nadir.

It is thus useful to be able to generate an artificial feature corresponding to a range ambiguity. In addition to being able to generate just a single range ambiguity, it is also useful to be able to generate a combination of multiple range ambiguities, since this can be more representative of real SAR data. It can be also useful to generate range ambiguities to test algorithms relying on waveform diversity (changes in the radar pulse sent out by the SAR system) to detect and suppress range ambiguities.

In an example of generating raw data for a range ambiguity as the artificial feature in the case of waveform diversity, the received baseband signal of a point target including the range ambiguity can be expressed as follows:

$$h(\eta, t) = \sum_{i=-N}^{N} A exp \left[ -j4\pi \frac{R_i(\eta)-R_0}{\lambda} \right] \cdot exp \left\{ j\pi \left[ -\frac{B}{2} + K_i \left[ t - 2\frac{R_i(\eta)--R_0}{c} \right]^2 + \Phi_i \right] \right\} \tag{20}$$

where $i$ represents the range ambiguity index. For $i = 0$ the unambiguous data is expressed while for all nonzero values, the ambiguous data is described. In this case the range to the ambiguous target is:

$$R_i(\eta) = R_0(\eta) - i\frac{c}{2PRF} \tag{21}$$

where $c$ is the speed of light and $PRF$ is the pulse repetition frequency. The waveform diversity is expressed by $i$ dependence of the chirp rate, $K_i$, and the time invariant phase term, $i$. $K_i$ is one of $K$ chirp rate, depending on the sequence of the waveform, and $i$ is the phase term to code the azimuth to shift the Doppler spectrum out of the processing window. Waveform diversity can be selected according to the scheme used in the algorithm for detecting and suppressing range ambiguities. The data can then be processed to extract the ambiguous image by using, for example, dual focusing techniques.

In an example, the raw data for multiple range ambiguities is generated as follows. Firstly, the raw data for 2*N+1 images are generated: raw data for 1 image of the desired region, which should be unambiguous, and raw data for 2*N images of the undesired regions. N represents the ambiguity index, which is indicative of the order of the range ambiguity that is being generated. Thus, N can be changed as desired depending on the number and the order of the range ambiguities to be generated. The ambiguity index, for an ambiguous point assuming a flat Earth, can be expressed as:

$$N = \lfloor \frac{R-R_n}{c/2PRI} \rfloor \tag{22}$$

where $R$ is the slant range to the far extent of the planned scene or target area to be imaged (i.e., the unambiguous region), $R_n$ is the estimated range to the ambiguous point, c is the speed of light, PRI is the pulse repetition interval and $\lfloor \rfloor$ is the floor operator. The ambiguity index may be an integer, and/or can be positive or negative. N thus represents the order of the ambiguity or ambiguities to include. For example, if, for the desired artificial feature corresponding to a range ambiguity, only a first level ambiguity is needed, (immediately before or after the main lobe), then N=1. There are 2*N images due to the presence of side lobes on each side of the main lobe. The '+1' term comes from the return from the target from the main unambiguous lobe, representing the real signal.

Secondly, the contribution of the ambiguity for each pixel is detected. In an example, this can be done by:

a. Analyzing the smear in the azimuth direction, and
b. Analyzing the smear in the range direction to detect for the case of chirp slope mismatch. A matched filtering means the received signal is "matched" to the filter that is the conjugate of the transmitted filter. The case of chirp slope mismatch occurs when the range ambiguous target is processed with the range unambiguous target parameters.

c. For each pixel, the probability of being focussed is determined. This effectively means determining how well focussed the data contained in each pixel is.

Thirdly, starting from the -Nth image, the contribution of the detected range ambiguity may be increased or decreased according to the requirements of the specific task the artificial range ambiguity is being generated for. In other words, the power contribution of the range ambiguous target being generated can be adjusted. For example, the amplitude of the detected range ambiguity could be increased or decreased by a scaling factor. This effectively controls how bright or how strongly the ambiguities show up in an image. Phase is not changed so that the original unambiguous image can be retrieved.

In a fourth step, the raw data for each ambiguity (in the case of multiple ambiguities) and for unambiguous target in the desired region can summed for 2N+1 raw data. This raw data can then be combined with real SAR data, as per block 506 of Figure 5.

Finally, in a fifth step the new raw data can be focussed to generate new SLC data containing the range ambiguities along with the original unambiguous target as in block 508 of Figure 5.

Optionally, after step three, this example method of creating range ambiguities allows separate ambiguous images for each given ambiguity N to be extracted by, for example, using delta focusing to process the raw generated data into the Nth ambiguous image. This step can be repeated by looping back to the third step above for each ambiguous image and for the image of the desired (unambiguous) region until all the images have been extracted.

This method of generating raw data of a range ambiguity as the artificial feature provides at least the following benefits. Firstly, one may add or stress range ambiguity by exaggerating (or suppressing) the range ambiguity in the image. The ability to scale up or down the intensity of the artificial features being generated (in this case range ambiguities) can be useful, for example for creating training images of real data with these artificial features added to assess the ability of range ambiguity suppression algorithms to detect ambiguities with different power levels. The range ambiguities that are artificially generated may have a mix of brightness, that can be useful, for example, for training a machine learning model to capture all instances of the ambiguities, independent of brightness.

Another benefit is the ability to generate multiple range ambiguities, for example of order 1, 2, and 3, and to put them in a single image of real data. This can be more representative of real SAR data, although in a practical example it may only be necessary to simulate range ambiguities of order -1, possibly along with order 1, which are the returns from the two ambiguous regions that are closest to the main desired (unambiguous) region being targeted, because this is where the highest level of ambiguous radar returns will come from.

In general, being able to combine artificial range ambiguities with real SAR data is very beneficial for developing algorithms and for training machine learning models to detect and suppress range ambiguities that occur naturally in SAR data.

Radio Frequency Interference (RFI) is another example of a type of artificial feature that can be generated and inserted into real SAR data. RFI is emitted radiation that can create noise or degrade the quality of a SAR image. RFI can arise from many sources, such as electronics, communications and broadcasting, and other Earth-based radar sources. RFI can also happen naturally, for example from solar storms. It would be useful to be able to produce realistic examples of SLC images corrupted by RFI, for example to train a machine learning system to be able to detect this kind of artifact in real images. For this purpose, the bandwidth and power level of detected RFI signals are estimated from real data. When implemented in software, the method may allow a user to select a relative bandwidth and power level for the RFI signal to be simulated by the artificial feature. The ranges of possible values for the bandwidth and power are determined based on the statistics of real RFI signals detected in SLC images.

Moreover, the modulation of the RFI signal can be estimated from real data using the least-mean-squares filter, which is used for RFI suppression. The output of the filter contains the estimated RFI signal for each azimuth position (range profile) of the SAR image. The extracted complex signal can be used to create a database of different RFI modulations. Each modulation is characterized by its bandwidth and power. In addition, the real amplitude and phase modulation of the RFI signal can be selected to allow the user more options in choosing the RFI signal.

For RFI, the raw data for each pulse is simulated as a narrowband random signal of chosen bandwidth and power level. Moreover, the RFI signal can occur in a specific number of pulses or the entire image (every pulse). Thus, the model for the RFI signal can be expressed as

$$h_{RFI}(\eta, t) = A_{RFI}(\eta) \sum_n exp\left(i2\pi f_n t\right) \tag{23}$$

where $A$ is the RFI signal amplitude depending on slow time and $f_n$ are a set of frequencies that span the chosen RFI bandwidth. The amplitude can either be a constant (RFI in every pulse) or a chosen window function scaled by the chosen power level (RFI in a subset of all pulses).

The method may also provide the user with the option of simulating a background, using a chosen statistical model for the Radar Cross Section (RCS), σ. In this case, the signal is simulated as an extended target, but the RCS value of each pixel is chosen from the specific random distribution describing the background clutter.

One difference between RFI and other types of simulated artificial features is that RFI is not so dependent on satellite parameters such as incidence angle, radar pattern, etc. Also, RFI can be widespread throughout an entire image, so the SLC data tile 404 in Figure 4 may in fact be chosen as the entire image formed by SAR SLC data 402a. Otherwise, the method proceeds as with all the other artificial features.

In summary, generating raw data corresponding to a desired type of artificial feature in block 502a in Figure 5 according to one example comprises:

1. Selecting of the original SAR SLC data and data tile that an artificial feature is to be inserted into;

2. Reading the metadata associated with the SAR SLC data;

3. If the simulated artificial feature is to be a stationary or moving target or an azimuth ambiguity, calculating the residual range migration $R_{res}(s)$ (equation 18) to take into the account the non-reversion of the range migration compensation in the defocussing of the original SAR SLC data (if applicable) by following equation 9 if the simulated feature is to be a moving target, or equation 12 if the simulated feature is an azimuth ambiguity (or an ambiguity of a moving target); Range ambiguities have no residual range migration, and the contribution of the range migration is not meaningful for simulated RFI features.

4. Generate the target raw data using equation 16, comprising the extended antenna pattern, that includes the main lobe and the side lobes (equation 15) for D, and comprising the IRF using equation 17 with the residual range migration included as the model for stationary or moving targets or azimuth ambiguities, equation 20 for range ambiguities where the quadratic term of the IRF is modified to consider the range ambiguous signal, and equation 23 in case of RFI.

The resulting simulated raw data is complex, including both amplitude and the phase information. Once the simulated raw data corresponding to the artificial feature is generated according to any of the methods set out in this disclosure, the raw data is combined with the defocussed raw data in the third step 506 of the method 500 to generate the new raw data, using the overlapping and sum principle as set out below.

$$v_{TOT}(\eta, t) = v_{dat}(\eta, t) + v_{sim}(\eta, t) \tag{24}$$

In the fourth step 508 of method 500, the new raw data including the combination of the raw data corresponding to the artificial feature and the defocussed raw data corresponding to the SAR SLC data or the SLC data tile is refocussed. As mentioned above, the refocussing function, which is the inverse function of the inversion function should be used to refocus the data. For example, the data may be refocussed using equations 1a and 1b (the reference functions in range and azimuth). This provides refocussed SAR SLC data including one or more focussed artificial features. In an optional additional step, this new or augmented SAR SLC data may be provided to a training process or testing process, such as to populate a training dataset of a neural network, or for testing one or more algorithms for detecting and suppressing ambiguities, for example.

It is to be understood that the new raw data/the new SAR SLC data may be referred to as 'augmented' raw data/SLC SAR data, since the defocussed raw data of the SAR SLC data has effectively been 'augmented' by the addition of one or more artificial features. As explained and exemplified in this disclosure, the artificial features may include any one or more of point like features, complex (multi-point) features, moving features and stationary features, azimuth ambiguities, range ambiguities, RFI ambiguities, and real features taken from other SAR data. The artificial features may further include a combination of such features, for example, an extended feature such as a ship and associated azimuth ambiguities.

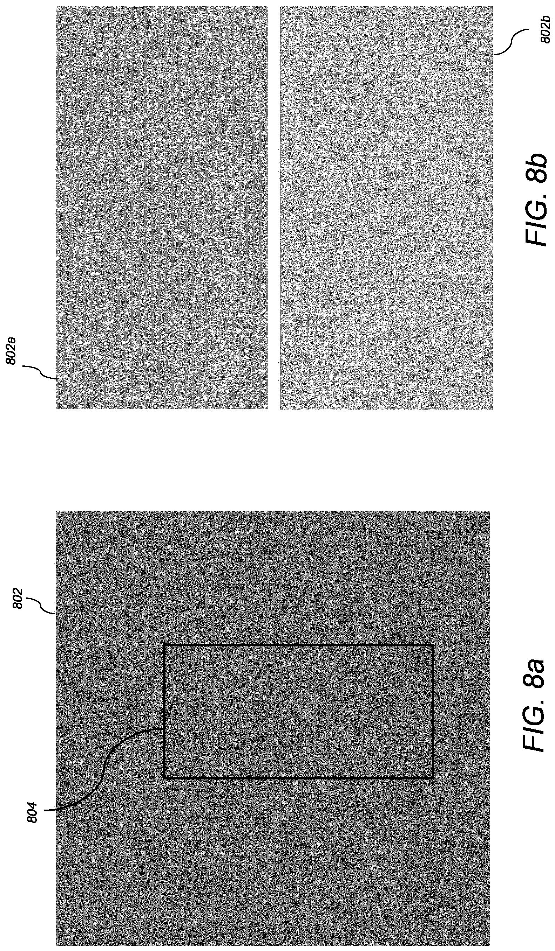

Figures 8a - 8f show an example of how method 500 can be used to add an artificial feature to real SAR SLC data. Figure 8a shows a SAR SLC data image 802 generated from real SAR SLC data. The image shows amplitude and is from a real acquisition taken of an ocean scene, where ships (small white dots) and an oil spill (darker areas) are visible in the lower left corner of the image. Data tile 804 is selected from the SAR SLC data 802 where the artificial feature is to be added. Through a defocussing operation, via the inversion function, the SAR SLC data 802 is defocussed into pseudo-raw data, as shown in Fig. 8b. The amplitude of the defocussed data is shown in 802a and phase of the defocussed data in 802b. In this example, 802a and 802b show the defocussed raw data for the entire image 802, although it may be desirable to only defocus the selected data tile 804, for example to save computational effort.

In this example, we would like to insert artificial features including an extended target, also a ship, along with its associated azimuth ambiguities into real image 802. Simulation parameters for generating the artificial features are shown below in Table 1. In this example, simulation parameters such as PRF, range to scene center, duty cycle, range resolution, and incidence angle are taken from the SAR SLC metadata. A further input defines that ambiguities are to be generated up to ambiguity number (or order) N = 2 as part of the simulation.

Table 1. Simulation Parameters

| Parameter Name | Unit | Value |
| --- | --- | --- |
| PRF | Hz | 4817 |
| Range to scene center | km | 669 |
| Duty Cycle | % | 20 |
| Number of Ambiguity | | N=2 |
| Range Resolution | m | 1 |
| Incidence angle | degree | 29 degrees at scene center |

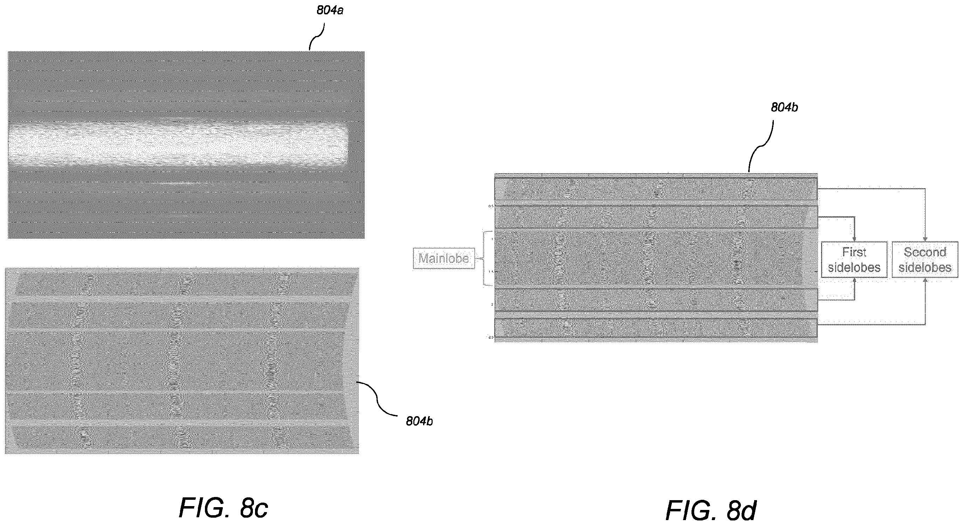

Using the equations above, the raw data for the target ship and the azimuth ambiguities are generated by the SAR data simulator for data tile 804. The simulated raw data for the artificial features are shown in Figure 8c. The amplitude of the simulated raw data is shown in 806a and the phase of the simulated raw data is shown in 806b. In Figure 8d, the phase of the simulated raw data is broken up to show the contributions from the main lobe as well as from the first and second side lobes. The main lobe provides the unambiguous target in its correct position, while returns from the first sidelobes form the N=1 ambiguities and the returns from the second sidelobes form the N=2 ambiguities. In this example, the first and second order ambiguities below the main lobe are negative or "right" ambiguities, representing the N = -1 and N = -2 ambiguities, and the first and second order ambiguities above the main lobe and the positive or "left" ambiguities, representing N = +1 and N = +2 ambiguities.

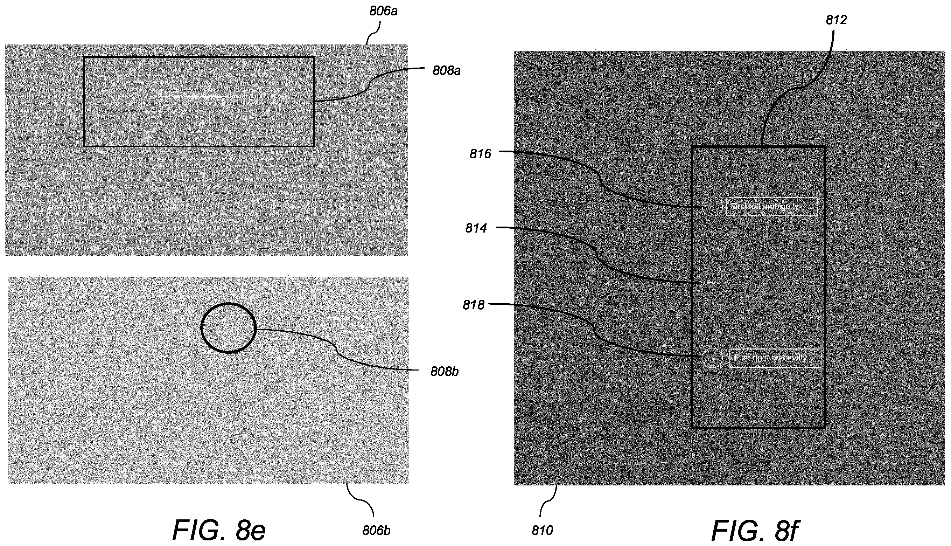

This simulated raw data is then combined with the real raw data. Figure 8e shows the resulting hybrid real-simulated data. The combination of the complex pseudo-real raw data 802a and 802b with the simulated complex raw data 804a and 804b results in the complex hybrid-simulated augmented raw data 806a and 806b. Image 806a shows the amplitude of the augmented data, and image 806b shows the phase of the augmented data. Region 808a in image 806a represents the data tile where the simulated raw data has been inserted. The phase contribution of the simulated raw data to the real data can also be seen in image 806b in region 808b.

Once this augmented raw data is generated, it can undergo a refocussing operation followed by a normalization and gradient removal process to finally obtain augmented SAR SLC data 810, as shown in Figure 8f. Image 810 of Figure 8f shows the amplitude component of the original SAR SLC data 802 with the addition of the artificial feature(s) in region 812. Artificial feature 814 is the simulated ship imaged via the main lobe of the radar beam, while first left ambiguity 816 and first right ambiguity 818 are ambiguous images of the same ship arising from the side lobes. As can be seen, the two ambiguities are less bright (lower amplitude) than the unambiguous target, with the first right ambiguity being less bright than the first right ambiguity. Note only the first order N = 1 and N = -1 ambiguities are visible. The power of the side lobes can drop off quickly, so the returns from the second order N = 2 and N = -2 ambiguities are not bright enough to show up in this image, although they are still there. It is to be understood that, whilst figure 8f shows amplitude data, in reality the data is complex data comprising both amplitude and phase. Augmented SAR SLC data 810 can now be used for various purposes, for example for calibrating algorithms and for training machine learning models to detect azimuth ambiguities.

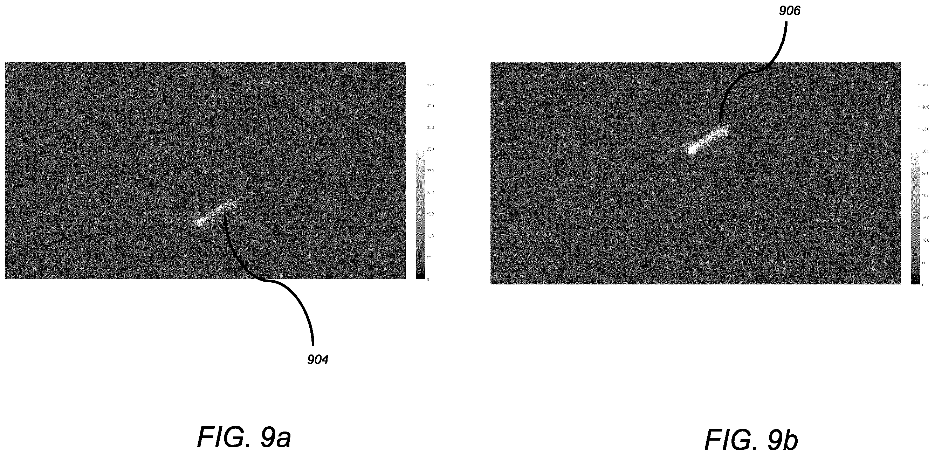

Figure 9a shows an example of a simulated stationary extended target 904. In this example, the extended target is a ship. Figure 9b shows the effect of simulating the same ship as a moving target 906, with an azimuth velocity of 11 m/s and a ground range velocity of 16.7 m/s. These parameters are input into the SAR data simulator along with appropriate values for the other parameters shown in Table 1, depending on the SAR data that the simulated moving ship is to be inserted into. Note in Figure 9b that the simulated moving ship appears as being shifted somewhat in the azimuth and range directions compared to if the ship were stationary in the same position.

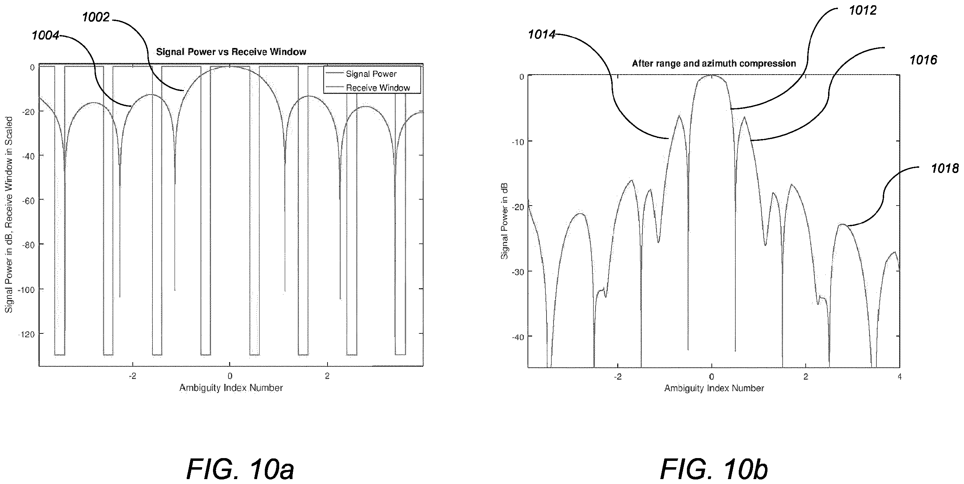

In an example, a simulation of range ambiguities is performed using the parameters given below in Table 2. Range ambiguity index is calculated by using the radar parameters and elevation antenna pattern. In Figure 10a, the received signal power is simulated with respect to the ambiguity index. Figure 10a shows the normalized signal power for the raw data. The signal power of the returns from the desired (unambiguous) region (N=0) is shown by curve 1002. 1004 is the strength of the signal power returning from the ambiguous region of order N = -1 that is immediately next to the ambiguous region and closest to the satellite.

Table 2. Simulation Parameters

| Parameter Name | Unit | Value |
|---|---|---|
| PRF | Hz | 5000 |
| Range to scene center | km | 600 |
| Duty Cycle | % | 20 |
| Number of Ambiguity | | N=8 |
| Range Resolution | m | 1 |
| Incidence angle | degree | 0 @ -4th ambiguity (Nadir), 33.5@ Unambiguous Scene Center |

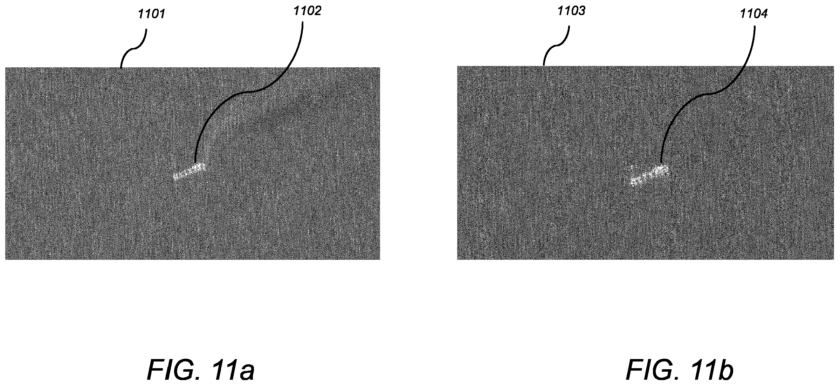

According to the simulated values, the range ambiguity to signal ratio (RASR) is given in Table 3. This corresponds with the signal powers shown in Figure 10b, which shows the normalized signal power after range and azimuth compression. The signal 1012 from the desired (unambiguous) region is considered to be the full signal, and the signal from each ambiguity is a ratio of the full signal. As can be seen from Table 3 and signal 1014 in Figure 11b, the strongest ambiguity is of order -1, with a RASAR of -14. The closest ambiguous region on the other side of the unambiguous region with N=1 has a slightly lower signal 1016, shown as -17 dB in Table 3. As can be seen from Table 3, other regions can also contribute to the SAR signal if there is strong enough target backscattering.

Table 3. RASR vs range ambiguity index

| Range Ambiguity Index | -4 | -3 | -2 | -1 | 1 | 2 | 3 | 4 |
|---|---|---|---|---|---|---|---|---|
| RASR, dB | -13 | -24 | -22 | -14 | -17 | -23 | -26 | -24 |

In particular, the return from the nadir, which in this example is shown in Table 3 as ambiguity order N = -4 and having a RASR of -13 dB, has a particularly strong return. The nadir is known in SAR to provide a strong return because specular reflections from areas in the nadir can be add significantly to the backscattered signal, even if the amount of energy reaching the nadir is small relative to the amount of radar energy reaching the desired target. It is for this reason that SAR systems are typically side-looking rather than looking straight down, as is common for optical systems. SAR systems function based on back-scattered radiation, which would be completely swamped by the intense specular reflections that would occur if the SAR system were pointed straight down. Therefore, SAR systems typically operate at incidence angles of 10 degrees or greater in order to avoid these specular reflections. However, even with SAR systems operating at these higher incidence angles there can still be some returns from the nadir that can cause a range ambiguity in a SAR image, and thus it is beneficial to be able to simulate these range ambiguities and to combine them with real data in order to develop and test better methods for detecting and suppressing nadir and other range ambiguities.

In another example, artificial features as described above can also be inserted into real SAR data using real data instead of simulated data, or a combination of both real data and simulated data. For example, a suitable extended target may be found in an image obtained from another set of real SAR SLC data. Figure 11a shows an example SAR image 1101 of a real (non-simulated) ship 1102. If the imaging geometry used to take the ship is similar to the geometry of the real SAR data we want to insert the ship into, the raw data for the ship can be inserted into the real SAR data as an artificial feature. If the raw defocussed SAR data for the ship is available, a data tile can be extracted and combined directly with the data tile in the real defocussed SAR data where the ship is to be inserted. If only the focussed SAR SLC data is available for the ship, a suitable data tile containing the ship can first be defocussed in order to obtain pseudo-raw defocussed data, in the same way that the real SAR SLC data is defocussed in order to obtain its pseudo-raw data. The pseudo-raw defocussed data of the ship can then be combined with the pseudo-raw defocussed data of a data tile of the same size from the original raw defocussed data. The combined defocussed data can then be focussed and inserted into the original SAR SLC data and normalized to produce the new focussed SLC data with the (real) artificial feature inserted to form focussed augmented SAR data.

In an example, one way to ensure that the imaging geometry of the real target is close enough to the imaging geometry to be inserted into the original real SAR data is to maintain a library of images taken from a variety of imaging geometries with features in them that could be used as artificial features in other SAR images. However, if the imaging geometry is not sufficiently close, the real target can still be helpful for generating a simulated target. Referring to Figure 11b, image 1103 shows a simulated ship 1104 that has been created by masking the shape of the real ship 1102 in image 1101 and using the actual amplitude values to simulate those pixels with simulation parameters (e.g., imaging geometry) suitable for the real SAR data that the artificial features is to be inserted into. The simulation can be done using the same SAR data simulator 410 used for creating the raw data for other artificial features. The raw data of the simulated artificial feature can then be combined with the pseudo raw data of the original SAR raw data.

Although the above examples in Figures 11a and 11b refer to an extended target in the form of a ship, any type of artificial feature can also be inserted as real data in a similar manner, including point targets, moving targets, azimuth ambiguities, range ambiguities, and RFI.

In the embodiments described above, all or parts of the method may be performed by a server. The server may comprise a single server or network of servers. In some examples, the functionality of the server may be provided by a network of servers distributed across a geographical area, such as a worldwide distributed network of servers, and a user/operator of the method may be connected to an appropriate one of the network servers based upon, for example, a user location.

The embodiments described above may be fully automatic. In some examples a user or operator of the system may manually instruct some steps of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile, or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and Blu-ray (RTM) disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device. It will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

The subject matter described here may be defined by the following clauses:

## CLAUSES

1. A computer-implemented method for augmenting real synthetic aperture radar (SAR) data, the method comprising:

obtaining defocussed real SAR data comprising SAR imaging data acquired from an area on the surface of the Earth;
obtaining defocussed additional SAR data of one or more features;
combining the defocussed real SAR data with the defocussed additional SAR data to obtain augmented defocussed SAR data.

2. The method of clause 1, further comprising:

focussing the augmented defocussed SAR data to obtain augmented focussed SAR data, wherein the augmented focussed SAR data comprises real SAR data and data relating to the one or more features;
wherein the augmented focussed SAR data comprises amplitude and phase information.

3. The method of any preceding clause, wherein the real SAR data has previously been focussed and obtaining defocussed real SAR data comprises defocussing previously focussed real SAR data using an inversion function to form defocussed real SAR data from the previously focussed real SAR data.

4. The method of clause 3, wherein the previously focussed real SAR data comprises real SAR SLC data.

5. The method of any preceding clause wherein the one or more artificial features comprise one or more of a point target, an extended target, a moving target, a moving extended target, an azimuth ambiguity, a range ambiguity, and radio frequency interference.

6. The method of any preceding clause wherein obtaining defocussed additional SAR data of one or more features comprises simulating the one or more features to generate the defocussed additional SAR data of the one or more features.

7. The method of any preceding clause wherein obtaining defocussed additional SAR data of one or more features comprises using one or more parameters taken from metadata associated with the real SAR data.

8. The method of clause 7, wherein the one or more parameters comprise one or more of an incidence angle, a pulse repetition frequency, and an antenna pattern.

9. The method of any preceding clause wherein obtaining defocussed additional SAR data of one or more features comprises obtaining SAR data of a real feature extracted from other real SAR data.

10. The method of any preceding clause, wherein the one or more features include one or more physical objects.

11. The method of clause 3 or any preceding clause when dependent on clause 3, wherein the inversion function comprises one of the Omega k, range doppler, time domain correlation, and the chirp scaling algorithm functions.

12 The method of clause 3 or any preceding clause when dependent on clause 3, wherein the inversion function does not revert range migration compensation that was originally performed to form the focussed real SAR data.

13. The method of clause 3 or any preceding clause when dependent on clause 3, wherein refocussing comprises applying a refocussing function that is the inverse of the inversion function.

14. The method of any preceding clause, further comprising training a neural network or supervised learning algorithm with augmented focussed, SAR data, optionally SAR SLC data;

15. The method of clause 3 or any preceding clause when dependent on clause 3, wherein defocussing the previously focussed real SAR data comprises defocussing a minor portion of the already focussed real SAR data;

16. The method of clause 15, further comprising selecting the portion of the real SAR data from the already focussed real SAR data, based on at least one of a size, position and a type of the one or more artificial features;

17. A method of augmenting real SAR data with artificial features, the method comprising:

Obtaining real SAR SLC data;
Selecting a data tile from the real SAR SLC data that an artificial feature is to be inserted into;
Reading the metadata associated with the real SAR SLC data;
Defocussing the real SAR SLC data associated with the selected data tile;
Generating the defocussed SAR data for the one or more artificial features;
Combining the defocussed real SAR SLC data with the defocussed SAR data for the one or more artificial features to form the defocussed augmented SAR data;
Refocussing the defocussed augmented SAR data using the inverse of the function used to defocus the real SAR SLC data associated with the selected data tile to form the focussed augmented SAR data.

18 Augmented SAR data comprising real SAR data and artificial features created according to the method of any preceding clause.

19. A computing system comprising a memory and processor, the memory having instructions stored thereon, which, when executed by the processor, cause the processor to perform the method of any of clauses 1 to 17.

20. The computing system of clause 14 wherein the computing system is further configured to train a supervised learning algorithm or neural network with the augmented SAR data of clause 18.

21. A computer readable medium having instructions stored thereon, which, when executed by a processor, causes the processor to perform the method of any of clauses 1 to 17.

22. A computer program, which when executed by a processor, causes the processor to perform the method of any of clauses 1 to 17.

23. A computer system comprising a plurality of computing devices, the plurality of computing devices each having a memory and a processor, the plurality of computing devices being configured to perform the method of any of clauses 1 to 17.

**Claims**

**1.** A computer-implemented method for augmenting real synthetic aperture radar (SAR) data, the method comprising:

obtaining defocussed real SAR data comprising SAR imaging data acquired from an area on the surface of the Earth;
obtaining defocussed additional SAR data of one or more features;
combining the defocussed real SAR data with the defocussed additional SAR data to obtain augmented defocussed SAR data.

**2.** The method of claim 1, further comprising:

focussing the augmented defocussed SAR data to obtain augmented focussed SAR data, wherein the augmented focussed SAR data comprises real SAR data and data relating to the one or more features;
wherein the augmented focussed SAR data comprises amplitude and phase information.

**3.** The method of any preceding claim, wherein the real SAR data is previously focussed real SAR data and obtaining defocussed real SAR data comprises defocussing the previously focussed real SAR data using an inversion function to form the defocussed real SAR data from the previously focussed real SAR data.

**4.** The method of claim 3, wherein the previously focussed real SAR data comprises real SAR SLC data.

**5.** The method of any preceding claim wherein the additional SAR data of one or more features comprises SAR data of one or more of a point target, an extended target, a moving target, a moving extended target, an azimuth ambiguity, a range ambiguity, and radio frequency interference.

**6.** The method of any preceding claim wherein obtaining defocussed additional SAR data of one or more features comprises simulating a feature to generate defocussed SAR data of an artificial feature;

**7.** The method of any preceding claim wherein obtaining defocussed additional SAR data of one or more features comprises using one or more parameters taken from metadata associated with the real SAR data.

**9.** The method of any preceding claim wherein obtaining defocussed additional SAR data of an one or more features comprises using a real feature extracted from other real SAR data.

**10.** The method of any preceding claim, further comprising training a neural network or supervised learning algorithm with the augmented focussed SAR data or the augmented defocussed SAR data..

**11.** The method of claim 3 or any of claims 4 to 10 when dependent on claim 3, wherein defocussing the previously focussed real SAR data comprises defocussing a portion of the previously focussed real SAR data.

**12.** The method of claim 11, further comprising selecting the portion of the real SAR data from the previously focussed real SAR data, based on at least one of a size, position and a type of the one or more features.

**13.** Augmented SAR data created according to the method of any of claims 1 to 12.

**14.** A computer readable medium having instructions stored thereon, which, when executed by a processor, cause the processor to perform the method of any of claims 1 to 12;

**15.** A computer system configured to train a supervised learning algorithm or neural network with the augmented SAR data of claim 13.

*FIG. 1*

100

120

30

Not to scale

*FIG. 2*

*FIG. 3*

FIG. 4

27

EP 4 509 866 A1

500

502a

| 502 | Obtain real focussed SAR SLC data for input, including optionally extracting data tile from SAR SLC data for substitution with new SLC data |

| 502a | Generate raw unfocussed SAR data corresponding to one or more desired types of artificial features. |

| 504 | Defocus SAR SLC data from data tile using inversion function to obtain defocussed data. |

| 506 | Combine defocussed SAR SLC data with raw defocussed data corresponding to one or more artificial features to obtain unfocussed augmented SAR data. |

| 508 | Focus augmented SAR data using refocusing function to generate new augmented focussed SAR data comprising real SAR data and one or more artificial features. |

*FIG. 5*

*FIG. 6*

EP 4 509 866 A1

FIG. 7

*FIG. 8b*

*FIG. 8a*

804a

804b

804b

Mainlobe

First sidelobes

Second sidelobes

*FIG. 8c*

*FIG. 8d*

FIG. 8e

FIG. 8f

*FIG. 9b*

*FIG. 9a*

FIG. 10a

FIG. 10b

*FIG. 11a*

*FIG. 11b*

# EUROPEAN SEARCH REPORT

Application Number

EP 23 19 1365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PLACIDI SIMONE ET AL: "Advanced SAR simulator for ATR and AI database generation", 2021 7TH ASIA-PACIFIC CONFERENCE ON SYNTHETIC APERTURE RADAR (APSAR), IEEE, 1 November 2021 (2021-11-01), pages 1-6, XP034047804, DOI: 10.1109/APSAR52370.2021.9688497 [retrieved on 2022-01-20] * the whole document * ----- | 1-7,9, 11-15 | INV. G01S7/40 G01S13/90 G06N3/08 G06N20/00 |
| A | Lewis Benjamin ET AL: "Machine Learning Techniques for SAR Data Augmentation", , 29 August 2019 (2019-08-29), XP093109554, Retrieved from the Internet: URL:https://apps.dtic.mil/sti/pdfs/AD10795 18.pdf [retrieved on 2023-12-06] * the whole document * ----- | 1-7,9-15 | |
| A | CHENWEI WANG ET AL: "SAR Target Image Generation Method Using Azimuth-Controllable Generative Adversarial Network", ARXIV.ORG, CORNELL UNIVERSITY LIBRARY, 201 OLIN LIBRARY CORNELL UNIVERSITY ITHACA, NY 14853, 10 August 2023 (2023-08-10), XP091590775, DOI: 10.1109/JSTARS.2022.3218369 * the whole document * ----- -/-- | 1-7,9-15 | TECHNICAL FIELDS SEARCHED (IPC) G01S G06N |

The present search report has been drawn up for all claims

| Place of search | Date of completion of the search | Examiner |
|---|---|---|
| Munich | 7 December 2023 | Rudolf, Hans |

EPO FORM 1503 03.82 (P04C01)

Europäisches
Patentamt

European
Patent Office

Office européen
des brevets

## EUROPEAN SEARCH REPORT

Application Number

EP 23 19 1365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIA HECHENG ET AL: "SAR Image Generation by Integrating Differentiable SAR Renderer with Neural Networks", IGARSS 2023 – 2023 IEEE INTERNATIONAL GEOSCIENCE AND REMOTE SENSING SYMPOSIUM, IEEE, 16 July 2023 (2023-07-16), pages 2057-2060, XP034448280, DOI: 10.1109/IGARSS52108.2023.10283368 [retrieved on 2023-10-20] * the whole document * | 1-7,9-15 | |

TECHNICAL FIELDS
SEARCHED      (IPC)

The present search report has been drawn up for all claims

| Place of search | Date of completion of the search | Examiner |
|---|---|---|
| Munich | 7 December 2023 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)